# EUROPEAN PATENT APPLICATION

(11) **EP 2 045 976 A1**
(43) Date of publication of application: **08.04.2009**
(21) Application number: 07803656.3
(22) Date of filing: 09.07.2007
(51) Int. Cl.: H04L 12/56, H04L 12/28, H04Q 7/00

(54) **SYSTEM AND METHOD FOR ROUTING A DATA PACKET IN A WIRELESS NETWORK, COMPUTING SYSTEM IN A SYSTEM FOR ROUTING A DATA PACKET IN A WIRELESS NETWORK AND METHOD FOR ROUTING A DATA PACKET IN A COMPUTING SYSTEM**

(30) Priority: 10.07.2006 ES 200601862
(71) Applicant: Miraveo Inc., San Jose, CA 95118 (US)
(72) Inventor: GARCÍA VIDAL, Jorge, E-08034 Barcelona (ES); MORILLO POZO, Julián David, E-08034 Barcelona (ES); FUSTÉ VILELLA, David, E-08034 Barcelona (ES)
(74) Representative: Barlocci, Anna
(86) International application number: PCT/ES2007/070129
(87) International publication number: WO 2008/006926

(57) **Abstract**

An embodiment of the present invention provides a method and system for detecting the inability of the designated intermediate node (A₁;A₂) to forward, via itself, the data packet from the previous node to the designated intermediate node, to the node after the designated intermediate node according to the forwarding path; and a method and system for obtaining a set of cooperating nodes of the designated intermediate node (A₁;A₂), from among all the nodes of the network (N₀,...,N₁₅), to forward, via itself, the data packet from the previous node to the designated intermediate node to the node after the designated intermediate node according to the forwarding path, in case that the designated intermediate node is unable to do so.

A system which allows using the resources of the nodes next to the nodes of the forwarding path for increasing their communication capacity and processing is achieved.

## Description

The present invention relates to a method and system for forwarding a data packet in a wireless network, from a source node to a destination node, through at least one node of the network which acts as the designated intermediate node, establishing a forwarding path. More specifically, it refers to a cooperative forwarding method for multi-hop ad-hoc networks that allows using the resources of the nodes next to the nodes of the forwarding path to increment their capacities of communication and processing.

It also refers to a method for forwarding a data packet in a wireless network, to a computing system in a system to forward a data packet in a wireless network, and to a method for forwarding a data packet in a computing system.

The invention may be directly put into practice as cooperator forwarding method of a data packet, or may be adapted to known protocols.

### Background of the invention

One of the most important problems in signal transmission via radiofrequency is the fast attenuation that the transmitted signal suffers with the distance. So, when it is expected to transmit a data packet with a considerably high data rate and long distance, a transmitter with large transmission power is needed in order to make the data packet reach the destination with a low error rate. Obviously, this solution is not suitable for, for example, mobile devices such as cellular phones or PDAs which have to consume little power or have limited transmission power.

One of the adopted solutions, already several years old, for transmitting data packets via radiofrequency has been the creation of multi-hop communication networks, in which data packets are forwarded through the nodes of the network, from a source node to a destination node of the network. First of all, in order to be able to forward the data packet, a routing protocol for discovering the forwarding path through the most adequate nodes of the network is needed. On the other hand, a routing (forwarding) method is necessary that indicates to every node of the forwarding path which forwarding path the data packet should follow, and which normally consists of a forwarding table lookup which sets the next node in the path towards the destination, and the subsequent relaying of the data packets addresses to this node.

Basically, the routing protocol establishes, from among all nodes of the network, the nodes which have to take part of the process of forwarding the data packet from the source node to the destination node, that is, it establishes the designated intermediate nodes in which the data packets will travel through. Moreover, this protocol provides all the routing information needed in the forwarding tables of each of the nodes that belong to the established forwarding path (each node knows, according to the destination node, which node it has to send the data packet to). To discover the forwarding path, all nodes of the network have to communicate with each other (for example, exchanging messages among themselves with routing information), and this way the most suitable nodes to forward the data packet will be assigned and how these node have to communicate between them will be established.

One example of routing protocol is described in the application of the European patent EP1122919, with title "Routing method for ad hoc networks", under the name of CIT Alcatel. In this application a methodology that allows establishing a forwarding path between a source node and a destination node in a multi-hop ad-hoc network is described.

Another example of routing protocol is the IETF standard known as AODV (Ad hoc On-demand Distance Vector), which allows establishing forwarding paths in multi-hop ad-hoc networks. AODV starts discovering forwarding paths when a node of the network needs to known a forwarding path to a new destination node.

Regarding the forwarding method, it uses the address of the final destination node of the data packet (that is, of the end of the forwarding path that the data packet has to follow) to get the address of the node in which the data packet has to be transmitted (commonly named as next-hop). This mapping may be found in what is commonly named forwarding table. Theses addresses (together with the address of the source node that generated the data packet and the address of the node that is currently transmitting the data packet) are found in the control header of the data packet when this data packet is transmitted. Since, as described before, every node of the forwarding path has a forwarding table which comprises the information used to know to which node the data packet has to be transmitted for an specific destination node, the node processes the data packet and, by means of the forwarding method, it discovers to which node the data packet has to be sent.

In the case where the designated intermediate nodes of the forwarding path are in a static position, the previously known forwarding methods (for example, non-cooperative methods) can have an acceptable performance. The problem appears when some of the designated intermediate nodes of the forwarding path change to a state of inability to forward the data packet, This can happen, for instance, if (i) the designated intermediate node moves to a place out of the coverage range of the previous node of the designated intermediate node, (ii) the designated intermediate node is switched off, due of lack of power or because the node enters into a power saving state; or (iii) because the data packet has been received with errors. Whatever the situation is, the communication between the nodes of the forwarding path breaks and therefore, a loss of data packets starts to occur. A possible solution to this situation is to update the forwarding tables of the nodes of the forwarding path, adapting them to the new situation, and establishing a new forwarding path. The main disadvantage of this solution is the large number of data packets that can be lost during the time between the breaking of the forwarding path and the updating of the forwarding tables of the implied nodes, since this process usually requires large periods of time (several seconds) for its execution.

On the other hand, cooperative protocols are well known in the state of the art. They allow nodes to use the resources of adjacent nodes to increase their capacities of communication and processing. The design of these protocols is a new and promising research field. However, although its popularity is increasing in wireless transmissions and peer-to-peer applications, it is less common in the intermediate layers of the communications stack, mainly within the 2 to 4 layers of the OSI reference model of ISO (International Standards Organization). The main reason may be that the basic methods and abstractions, such as a correct forwarding, which will ease the design of this type of protocols, are not defined in the communications stack that is used today in networks, as in, for example, TCP/IP, standardized by the IETF.

Recently, several documents related to cooperative protocols in the physical layer (layer 1 of the communications stack) have been published, for example, in *[*A. Nosratinia, T.E. Hunter, A. Hedayat, "Cooperative Communication in Wireless Networks". IEEE Communications Magazine, October 2004*].* The results obtained show that it is possible to obtain big power savings and big increases of range, although they require complex radiofrequency hardware.

In the area of cooperative protocols within the application layer (layers 5 to 7 of the communications stack), recently an increase of proposals for well-known protocols has occurred, such as peer-to-peer (P2P). These proposals have demonstrated their capacity to create distributed systems and self-organized, in which resources such as content, CPU, storage or bandwidth are shared.

Regarding to layers 2 to 4, evidences exist of achieving large gains by using cooperative protocols in these layers without an increase in the complexity of the hardware, although, as described before, they have not been deeply studied in the literature. Some examples of this work are the following: *[*P. Larsson, "Selection Diversity Forwarding in a Multihop Packet Radio Network with Fading Channel and Capture". ACM SIGMOBILE Mobile Computing and Communication Review, Vol 5 No. 4 (2001), 47-54*], [*S. Biswas, R. Morris, "ExOR: Opportunistic Multi-hop Routing for Wireless Networks", Proceedings of ACM SIGCOMM'05 pp. 133-143, Philadelphia, Pennsylvania, USA, 2005*]* y *[*A. Bletsas, A. Khisti, D. Reed, A. Lippman, "A Simple Cooperative Diversity Method Based on Network Path Selection" IEEE Journal on Selected Areas in Communications, Vol. 24, No. 3, March 2006*]*

It must be pointed out that, in general, the same method can be used by communication protocols placed in different layers of the OSI reference model of ISO. For instance, the forwarding of a packet is usually performed at layer 3, but it can also be performed in other layers (for instance, at layer 3 or even at application layer). Therefore the method described is not limited to its application to a specific layer of the OSI reference model of ISO.

### Description of the invention

From what was described above, it is an objective of the present invention to provide a system for forwarding a data packet in a wireless network which allows optimizing the performance of it.

This objective is achieved through claim 1, providing a system for forwarding at least one data packet in a wireless network, which comprises means for detecting the inability of the designated intermediate node to forward, via itself, the data packet from the node previous to the designated intermediate node to the node after to the designated intermediate node of the forwarding path; and means for obtaining a set of cooperating nodes of the designated intermediate node, from among all the nodes of the network, to forward, through this set, the data packet from the node previous to the designated intermediate node to the node after the designated intermediate node of the forwarding path, in case the inability of the designated intermediate node is detected.

The system according to the present invention may be considered as a cooperative forwarding method. Providing means for obtaining a set of cooperating nodes of the designated intermediate node causes that, in case that the inability of the designated intermediate node is detected, this set of cooperating nodes (which may comprise one or more nodes of the network) will be the responsible for forwarding the data packet, and then avoiding a break in the communication between the nodes of the forwarding path, and so, there are no lost packets, thus solving the transmission problems that found in the current wireless networks. Basically, none of the nodes of the forwarding path have to modify its forwarding table, thus no time is lost doing so and also no packets will be lost.

The set of cooperating nodes performs all of the functions of the designated intermediate node, to assure that the movement or the disappearance of this designated intermediate node does not affect the operation of the network. The nodes of the wireless network cooperate with each other, so that the designated intermediate node of the forwarding path uses the resources of adjacent nodes to increment its capacities of communication and processing, hence achieving a more robust network as a result of sharing these capacities of transmission and forwarding. These shared resources may be, for example, antennas, RF chains, network interfaces, memory or processors.

During the period of time during which the cooperation is being performed, the forwarding path determination protocol may perform an alternative forwarding path determination. Once the alternative forwarding path has been established, the data flow will follow the new forwarding path. The relevant characteristic of the described method is that, during the period of time of determination of a new forwarding path, the data flow is not interrupted.

Another advantage of the invention is that the method may be useful for accommodating, in wireless networks, the operation of already existent cooperative protocols (for example, the cooperative protocol MAC or the cooperative protocol ARQ), achieving a more natural operation.

In an extreme situation, in which the set of cooperating nodes of the designated intermediate node does not have any node, the network will continue operating as it operates if it was a non-cooperative network, but never worse.

Preferably, the system comprises means for obtaining a set of possible cooperating nodes of the designated intermediate node. This set of possible cooperating nodes comprises the nodes that potentially may act as cooperating nodes of the designated intermediate node, when this designated intermediate node is not able to forward the data packet. Obtaining this set of possible cooperating nodes of the designated intermediate node may be performed at intervals of time, for example, every three seconds, and it is independent of the transmission of the data packet of the node previous to the designated intermediate node of the forwarding path. This way, as the set of possible cooperating nodes is already known when the transmission is performed, the time needed to confirm the reception of the data packet is decreased, and this fits very well for some protocols.

According to a preferred embodiment of this invention, the means for obtaining the set of possible cooperating nodes of the designated intermediate node comprise means for obtaining the set of nodes that are within the range of the designated intermediate node; and means for selecting, from this set of nodes, the set of possible cooperating nodes of the designated intermediate node, in such a way that this set of possible cooperating nodes fulfills the suitable conditions for acting as a cooperating node of the designated intermediate node.

This way, the set of possible cooperating nodes may be made up of those that have good communication channels with the designated intermediate node of the forwarding path. The determination of a good communication channel may be based on several parameters of quality, such as the signal to noise ratio (SNR) or the bit error rate (BER).

Another advantage of the invention is that the node previous to the designated intermediate node does not take part in the decision of which node of the set of possible cooperating nodes of this designated intermediate node has to forward the data packet, in case of inability of the designated intermediate node (the set of cooperating nodes is chosen between the designated intermediate node and its set of possible cooperating nodes). From the previous node's point of view, due to the inability of the designated intermediate node to forward the data packet, a break in the forwarding path is not seen, since it receives a confirmation of the data packet, either from the designated intermediate node, if it is able to forward the packet, or from some of the nodes of the set of possible cooperating nodes, or from the designated intermediate node, if the designated intermediate node cannot forward the data packet.

According to an embodiment of the invention, the set of possible cooperating nodes may comprise means for detecting the inability of the designated intermediate node, although it is possible that, as described before, that the designated intermediate node can itself incorporate means for performing these methods.

In the same way, the set of possible cooperating nodes of a designated intermediate node can additionally comprise means for communicating the inactivity of the designated intermediate node, to the node previous to this designated intermediate node according to the forwarding path, although as previously described, it is possible that these means are comprised in the designated intermediate node itself. This notification of inactivity may be performed, for example, after a certain period of time of inactivity of the designated intermediate node, or after a certain number of data packets that cannot be forwarded by the designated intermediate node. Whatever the cause may be, a modification in the forwarding table of the previous node may be done, in order to achieve that the forwarding of a data packet for a destination node is done through another node, and thus obtaining a new forwarding path. This modification may be produced either by recalling the functionality of the forwarding path determination protocol (routing protocol) or using the local information provided to the intermediate designated nodes by the cooperating nodes themselves.

Preferably, each of the nodes of the network comprises routing information, and this routing information may be stored as a forwarding table. This information may comprise at least the address of the destination node of the data packet, and the address of the node to which to transmit the data packet in order to achieve the data packet finally reaching the destination node. This information is complemented with the data that the data packet has in its control header, the address of the destination node being relevant for the present embodiment. This way, when the designated intermediate node that receives the data packet processes it, it discovers the destination node of the data packet and, thanks to its forwarding table, it discovers the node through which the data packet has to be transmitted.

The designated intermediate node may comprise means for distributing to its set of possible cooperating nodes the needed routing information, and this information is introduced in the forwarding table of each of the nodes of the set of possible cooperating nodes. This way, the designated intermediate node keeps the forwarding tables of the nodes of the set of possible cooperating nodes updated in front of possible disappearances of nodes, whether, for example, due to mobility of nodes or to disconnections. The distribution of this routing information can be done during several periods of time.

It is important to emphasize that, thanks to the use of radio waves, the transmission of the data packet by the node previous to the designated intermediate node may be done at the same time both to this designated intermediate node and to its set of possible cooperating nodes. Thanks to this, as long as one node of the set of cooperating nodes of the designated intermediate node receives correctly the data packet, the previous node does not have to retransmit the data packet to be forwarded by the set of cooperating nodes, in the case that the designated intermediate node is not able to forward the data packet.

Since the set of possible cooperating nodes also receives the data packet, it (i.e. the nodes within this set) processes the data packet and it keeps the data packet until it discovers that the designated intermediate node has forwarded the packet. In the case that the set of possible cooperating nodes discovers that the designated intermediate node has not forwarded the data packet, either because it has not sent the confirmation of reception of the data packet to the previous node, or because it has not transmitted the data packet, the set of cooperating nodes, which belongs to the set of possible cooperating nodes, forwards the data packet to the node after the designated intermediate node.

If the set of cooperating nodes comprises more than one node, the forwarding of the data packet to the node after the designated intermediate node may be done by all the nodes of the set of cooperating nodes or by just one of these nodes. In this last case, the election of which node has to forward the data packet may be done, for example, following a predetermined order established by the designated intermediate node, either for proximity or for quality of the communication channel.

The data packet transmitted to the designated intermediate node and to its set of possible cooperating nodes may comprise one flag that informs to this set of possible cooperating nodes that it has to cooperate in the forwarding of the data packet (cooperation flag). This way, if the data packet has this flag set, the set of possible cooperating nodes knows that, in case of inability of the designated intermediate node, it has to take part in the forwarding of the data packet, and so, it (i.e. the nodes within this set) saves the data packet until it confirms that the designated intermediate node has forwarded the packet. If the data packet does not have this flag set, the network operates as if it was a non-cooperative forwarding method, that is, there is no cooperation between the nodes of the forwarding path and their adjacent nodes.

According to another embodiment of the invention, the means for discovering the set of cooperating nodes of the designated intermediate node may comprise means for obtaining, from the set of possible cooperating nodes, the subset of nodes that are within range of the node previous to the designated intermediate node, when this node previous to the designated intermediate node has transmitted the packet; and means for choosing, from this subset of nodes, the set of cooperating nodes of the designated intermediate node.

In this case, the set of cooperating nodes runs a big risk, since it does not know if the node after the designated intermediate node is in its range, although this embodiment considerably accelerates the process. This characteristic fits well for the protocols in which is necessary a fast confirmation of reception, such as 802.11.

Alternatively, the means for discovering the set of cooperating nodes of the designated intermediate node may comprise means for obtaining, from the set of possible cooperating nodes, the subset of nodes that are in range with the node previous to the designated intermediate node, when this node previous to the designated intermediate node transmits the data packet; means for obtaining, from this subset of nodes, a second subset of nodes in the way that the node after the designated intermediate node of the forwarding path is in range with this second subset of nodes; and means for choosing, from this second subset of nodes, the set of cooperating nodes of the designated intermediate node.

In this second case, the forwarding of the data packet is done with high probability, since the system checks if the node to which the data packet has to be transmitted is in range with the set of cooperating nodes of the designated intermediate node.

The system may also comprise means for detecting the inappropriate operation of a node of the set of possible cooperating nodes. This inappropriate operation can be because of, for example, an erroneous operation of the node or to an unnecessary operation. In the first case, these means avoid the node becoming part of the set of cooperating nodes, and thus, communication problems arising in the network (lost of data packets). Regarding to the second case, the fact that a node with an inappropriate operation stops working avoids an unnecessary consumption of system resources.

Regarding an embodiment of the invention, the set of possible cooperating nodes (referenced below as a cloud) comprises an identifier of this set (or cloud identifier). In this way, when the set of possible cooperating nodes is modified (whether, for example, because one of the nodes moves away from the range, or because one of the nodes closes), a new identifier is assigned to this set.

Moreover, the routing information of at least one of the nodes of the forwarding path may comprise the identifier of its set of possible cooperating nodes. In this way, only the nodes which have connectivity in that moment with the designated intermediate node will cooperate.

The invention may also comprise means that allows for a cooperating node belonging to a cloud to be able to learn that it has ceased to receive correctly the messages of the designated intermediate node (which will be referred to below as cloud master), whereas the master node correctly receives the frames, which is an indication that the node must cease its cooperation, as it introduces a broken cloud condition.

According to another aspect, the invention provides one method for forwarding at least one data packet in a wireless network, which comprises the steps of (A) to detect the inability of the designated intermediate node to forward, via itself, the data packet from the node previous to the designated intermediate node to the node after the designated intermediate node of the forwarding path; (B) in case of positive detection in step (A), to discover a set of cooperating nodes of the designated intermediate node, from among all the nodes of the network, to forward, via this set, the data packet from the node previous to the designated intermediate node to the node after the designated intermediate node of the forwarding path.

The method may also comprise a step (C) to obtain a set of possible cooperating nodes of the designated intermediate node. This step (C) may comprise the substeps (C.1) to obtain the set of nodes that are in range with the designated intermediate node; (C.2) to choose, from this set of nodes, the set of possible cooperating nodes of the designated intermediate node, in the way that this set of possible cooperating nodes satisfies suitable conditions to act as cooperating nodes of the designated intermediate node.

Regarding an embodiment of the invention, the step (B) of discovering the set of cooperating nodes of the designated intermediate node, comprises the substeps of (B.1) obtaining, from the set of possible cooperating nodes, the subset of nodes that are in range with the node previous to the designated intermediate node, when this node previous to the designated intermediate node transmits the data packet; (B.2) of choosing, from this subset of nodes, the set of cooperating nodes of the designated intermediate node.

Alternatively, step (B) of discovering the set of cooperating nodes of the designated intermediate node, may comprise the substeps (B.3) of obtaining, from the set of possible cooperating nodes, the subset of nodes that are within range of the node previous to the designated intermediate node, when this node previous to the designated intermediate node has transmitted the data packet; (B.4) obtaining, from this subset of nodes, a second subset of nodes in such a way that the node after the designated intermediate node of the forwarding path is within range of this second subset of nodes of the designated intermediate node; (B.5) of choosing, from this second subset of nodes, the set of cooperating nodes of the designated intermediate node.

According to another aspect of the invention, a computing system in a system to forward a data packet in a wireless network is provided, which is suitable to act as cooperating node of the designated intermediate node, and which comprises means for detecting the inability of the designated intermediate node to forward, via itself, the data packet from the node previous to the designated intermediate node to the node after the designated intermediate node of the forwarding path; and means for forwarding the data packet that comprise means for receiving the data packet from the node previous to the designated intermediate node of the forwarding path, and means for transmitting this data packet to the node after the designated intermediate node of the forwarding path, in case that the inability of the designated intermediate node is detected.

The means for transmitting the data packet to the node after the designated intermediate node of the forwarding path may comprise means for adding a flag to the data packet which informs about the set of possible cooperating nodes of the designated intermediate node which has to cooperate in the forwarding of the data packet.

Regarding another aspect of the invention, a method for forwarding at least one data packet in a computing system like the one described is provided, said method comprising the step (D) of receiving the data packet from the node previous to the designated intermediate node of the forwarding path; (A) detecting the inability of the designated intermediate node to forward, via itself, the data packet from the node previous to the designated intermediate node to the node after the designated intermediate node of the forwarding path; (E) in case of positive detection in step (A), to transmit the data packet to the node after the designated intermediate node of the forwarding path.

Regarding another aspect, the invention provides software that comprises computer instructions that are executed in a computing system to do the method for forwarding the data packet in a computing system.

This software may be stored in physical storage devices, such as recorder devices or a read-only memory, or may be carried by carrier wave such as electrical or optical wave.

### Definitions

The term "forwarding path" refers to the sequence of nodes between S and D, (S, A₁, A₂,..., A_{N}, D), which defines a path between S and D. It is supposed that the forwarding paths are discovered by the routing protocol of layer 3 (for example, AODV). The forwarding paths can break in a temporary way (for example, during times from milliseconds to seconds) or in a permanent way (times greater than several seconds). The temporary breaks can appear due to random changes in the fading due to movements of the environment, to temporal blocks between antennas (for example, due to a vehicle that crosses a radio link), etc. They can also appear due to that the transmission/reception systems of the nodes can enter in sleep states with the goal of achieving power savings. The permanent breaks are mainly due to the mobility of the nodes. The cooperative forwarding means tries to maintain the reliability of the forwarding path in both cases:
- In temporal breaks, the set of cooperating nodes assumes in a temporal way the role of forwarding.
- In permanent breaks, the set of cooperating nodes assumes the role of forwarding until the protocol L3 may discover an alternative forwarding path. In this case, the cooperative means can notify the protocol L3 the need of discovering a new forwarding path.

The term "designated intermediate node" (anchor or master node) refers to a node that is part of a route. Initially, it is chosen by the routing protocol. The designated intermediate node is not necessarily the node that performs the forwarding of the packets.

The term "cooperating node" refers to the node that has been elected by another node (designated intermediate node) in order to help the designated intermediate node in the work of forwarding. The cooperating shares routing information with the designated intermediate node (this information is considered to belong to the context of the designated intermediate node) and listens to the transmissions of the designated intermediate node and of other cooperators to know if it has to act or not. The set of possible cooperators (also named as "cloud") of a node N is Coop(N). Cooperators may be ordered according to a priority level that sets the order in which they will act.

The terms "node address" and "set address" refer to that if <@N> is a sequence of bits that only identifies the node N, then, for instance, it is possible to use a node address <@N,0> indicating that the packet is only directed to the node N and not to its cooperators. If a set address <@N,1,n> is used, being n a positive integer number, it is indicated, for instance, that the packet is also directed to its cooperator with sequence number greater or equal than n. The designated intermediate node which creates the set of possible cooperating nodes sets the sequence number. The designated intermediate node increments by 1 the sequence number, for instance, when either there is an important change in its state (for example, a change in the forwarding table) or when conditions like "broken cloud" are detected, that is, that the cloud of cooperators have lost connectivity with the designated intermediate node. This last condition can be detected because the node previous to the designated intermediate node receives more than a single acknowledgement for the same packet. In this case, the node previous to the designated intermediate node notifies to the designated intermediate node that it must increase its cloud number. The cooperating nodes which do not have connectivity with the intermediate designated node will not hear this update of the cloud sequence number carried out by the designated intermediate node, meaning that they will be excluded of the cloud, as they will receive packets with sequence cloud number higher than the sequence cloud numbers that these cooperating node will have.

The term "cooperation flag": not all packets use the cooperative forwarding means. For example, some signaling messages between neighboring nodes do not use it. This is notified in the cooperative header, i.e. in the part of the data packet which holds the specific information related to the cooperation function, and it must comprise information related to whether the cooperation function must or not being performed.

The term "forwarding" refers to a node that actually performs the task of actually relaying the packet in order to place it closer to its final destination, following a forwarding path set by the forwarding path determination protocol. If in the corresponding hop the designated intermediate node is N, the forwarding node is either the node N or one of the cooperators of N.

The term "neighbor": the neighbors of a node N (Neigh(N)) are those in which the node N can maintain a communication within a certain level of reliability.

The term "Forwarding table": Table in which pairs ("final destination node", "next-hop") are comprised. Its content is modified thanks to the information of the forwarding path determination protocol and the information obtained from other nodes (for instance, intermediate nodes with which the node cooperates). The forwarding table can be seen from different contexts. When a node N acts as itself, it looks for entries in the forwarding table that belong to the context "node N". If a node N acts as a cooperator of another node N', it only looks for entries in the forwarding table that belong to the context "node N' ". It is important to bear in mind that the entries of the forwarding table can have node addresses or set addresses. In a route, all the next-hops will be normally referenced by set addresses, except probably in the last hop.

The term "Cooperative Acknowledgments (C-ACK)": it is supposed that some of the cooperating nodes that received correctly the frame will send an acknowledgment, which is know by C-ACK. In this way, (i) the node that has transmitted the frame knows that the frame has been correctly received, whether by the designated intermediate node or by at least one of the cooperators of this designated intermediate node, and (ii) the cooperating nodes will know whether they must or not cooperate.

The C-ACK generation must follow a specific order. The designated intermediate node will be the first in generating the C-ACK in case it has received the data packet correctly. Otherwise, the C-ACK will be generated by any of the cooperating nodes (which will detect that the designated intermediate node does not generate the C-ACK).

In case that the frame forwarding method includes in native way some acknowledgement method (for instance, the unicast data packet ACK of IEEE 802.11),the use of C-ACK may not always be needed.

The term "Cooperative Hello (C-HELLO)": Message which is used by the cloud master to manage the cloud. It comprises cloud sequence numbers, cooperator list, master list, and forwarding information. It is sent either periodically in broadcast, or when some relevant change happens in the cloud state.

### Brief description of the drawings

For a better understanding of all the explained before, here are some drawings in which, schematically and only as a non-limiting example, there is a practical case of embodiment.

In the figures,
Fig.1 is a schematic representation of a wireless network upon which a system of forwarding data packets is implemented according with the details of the invention;
Fig.2 is a schematic representation of a first forwarding method for a cooperative network like that represented in Fig.1;
Fig.3 is a schematic representation of a second forwarding method for a cooperative network like that represented in Fig.1;
Fig.4 is a schematic representation of the wireless network of Fig.1 in which a transmission of a data packet for its forwarding takes place, the forwarding node itself is the designated intermediate node of the forwarding path of the data packet;
Fig.5 is a schematic representation of the wireless network of Fig.1 in which another transmission of the data packet for its forwarding takes place in which the forwarding node is the set of cooperating nodes of the corresponding designated intermediate node;
Fig.6 is a schematic representation of the wireless network of Fig.1 where a request for a change of the designated intermediate nodes of the route of the data packet takes place.

### Description of a preferred embodiment of the invention

Furthermore, the description of a preferred embodiment of the invention, applied to a wireless network of type ad-hoc multihop, will be described. For the mentioned description, it is assumed that the mentioned network is a homogeneous network; that is to say, it is regarding a network in which all of the nodes use the same addressing scheme.

Additionally, the addressing and forwarding schemes according to the invention, and that allow the potential of cooperation in wireless networks to be most efficiently exploited, will also be described.

As a general norm, the existence of cooperating nodes cannot be guaranteed. If a designated intermediate node does not find a possible cooperating node, network should continue functioning as if it is based upon a non-cooperative network. In this way, utilizing the system of this invention, the network will act, in the worst scenario, as a non-cooperative network, and never worse.

The method for forwarding data packets in the wireless network, between a source node and a destination node, allows, among other things, the easy performance of the cooperative protocols in the wireless networks. The idea of introducing cooperation in the nodes of the wireless network in order to optimize the use of resources, is certainly attractive, hence a node in the network must take upon itself the full responsibilities and functions of the other, with the intention to make sure that the functional state of the network will not be seen as affected due to the movement or the disappearance of the nodes.

The shared resources may be, but not limited to, antennas, RF channels, network interfaces, memory or processors.

Basically, the invention is applicable in wireless networks in order to allow the nodes to use the resources of the adjacent nodes in order to increase their capacity of communication and processing, being capable of implementing the method for themselves, adapting all the software and hardware already existent to this new method for forwarding, or as a improvement of the existent protocols, for example the ARQ protocol or MAC protocols, such as IEEE 802.11 (Wi-Fi).

Even though the idea of cooperation may be applied in a general way, it can be combined particularly well with the characteristics of the wireless networks since:
- It exploits the advantages of broadcast inherent in wireless transmissions.
- The fact that the quality of the wireless links depends primarily on distance, signifying that, in many cases, there is a clear relation of adjacency between the nodes.
- The cooperative use of antennas or interfaces of other nodes allows the introduction of methods for wireless transmissions, like those of special diversity.
- The replacing of the functionality of a node which acts as a transmitter, providing a significant resistance to the network by the presence of mobility of the nodes.

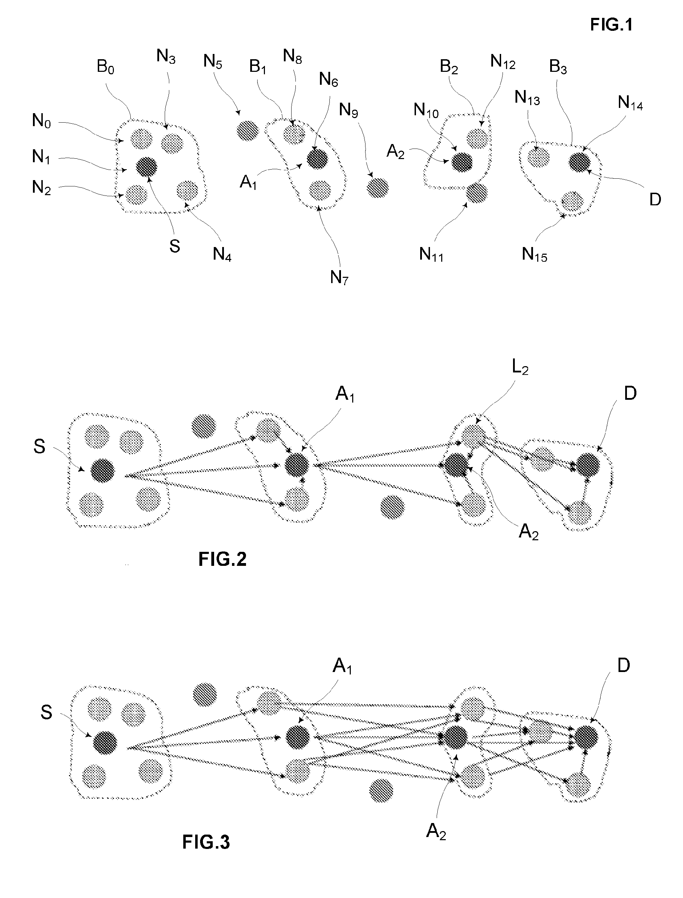

As shown in Fig.1, the wireless network comprises a plurality of nodes (N₀,N₁,N₂,...N₁₅) distributed in the zone in a specific way.

When a transmission of one (or more) data packets is desired, between the source node S and a destination node D, those same belonging to the plurality of nodes (N₀,N₁,N₂,...N₁₅), an intervention by a determination protocol is necessary for the forwarding path (S, A₁, A₂, D) which the data packets may use, which determines the nodes of the plurality of nodes (N₀,N₁,N₂,...N₁₅) that should take part of said transmission, said nodes being designated intermediate nodes A₁,A₂. For this purpose, the normal optimization criteria may be used: minimum number of hops, maximum transfer rate. However, in a cooperative network, other optimization criteria, such as maximize of the number of nodes of the set of possible cooperating nodes of a designated intermediate node, etc, could be used.

Once the route of data packets is reliably established, a tool for forwarding control for the data packets via of the nodes of the route is needed, the tool being the method for forwarding a data packet in a wireless network according to the invention.

The method for forwarding a data packet presents itself as a computer program and comprises a module to obtain, for each designated intermediate node Aᵢ (i=1,2 for the present realization) the set Bᵢ of possible cooperating nodes; a module to detect the inability of a designated intermediate node Aᵢ to forward, via itself, the data packet from the previous node Aᵢ₋₁ to the subsequent node A_{¡+1} to said designated intermediate node Aᵢ of the forwarding path; a module to determine a subset Li of cooperating nodes of a designated intermediate node Aᵢ, within its set Bⱼ of possible cooperating nodes for forwarding, via said set of cooperating nodes, the data packet from the previous node to the designated intermediate node of the forwarding path, in case that an inability of the designated intermediate node is detected.

The means also comprises a module in order to communicate the inability of a designated intermediate node Aᵢ, to the previous A¡₋₁ to said designated intermediate node of the forwarding path; and a module to determine the inadequate functioning of a node belonging to the set Bⱼ of possible cooperating nodes of a designated intermediate node Aᵢ.

The module for obtaining the set Bⱼ of possible cooperating nodes of a designated intermediate node comprises a sub module for obtaining the set of nodes of the network which are found within the coverage range of the designated intermediate node Aᵢ; and a sub module to select, between said set of nodes, the set Bⱼ of possible cooperating nodes, in such a way that said set of possible cooperating nodes fulfills the adequate conditions to act as a cooperating node of the designated intermediate node Aᵢ. Normally, said conditions are based on parameters of quality referring overall to the channels of communication connected between the designated intermediate node and the set of possible cooperating nodes (for example, the relation of signal to noise ratio, SNR, or the bit error rate, BER).

Furthermore, the module for obtaining the set Bᵢ of possible cooperating nodes of a designated intermediate node Aᵢ may also be presented in such a way of a computer program or as a module of a more general computer program that executes in the designated intermediate node in a manner which is the designated intermediate node itself who determines its set of possible cooperating nodes. Said module acts within predetermined periods of time, for example, every three seconds, independently from the fact that a data packet has been transmitted from the previous node to the designated intermediate node within the route of the data packet, that is to say, every said predetermined period of time a new set of possible cooperating nodes for the designated intermediate node is established.

The set Bᵢ of possible cooperating nodes of a designated intermediate node Aᵢ, is made available in a distributed and opportunistic manner, that is to say, the adjacent nodes that a designated intermediate node may establish a cooperation with are those that have the channels of communication particularly favorable and those that have established a trust relationship.

The module to detect the inability of the designated intermediate node Aᵢ may also be embodied in the form of a computer program or as a module of a more general computer program, that executes over of a set Bᵢ of possible cooperating nodes of the designated intermediate node Aᵢ, or over the designated intermediate nodes Aᵢ within the data packet forwarding path. This way, it is the set of possible cooperating nodes of a designated intermediate node or the designated intermediate node itself which determines the inability of itself. The way of detecting the inability of the designated intermediate node is based on the fact that, within the set of possible cooperating nodes that is within the range of the designated intermediate node, none of these nodes of the set of possible cooperating nodes receives the confirmation of reception of the data packet that has been sent by the designated intermediate node to the previous node A¡₋₁ of the forwarding path, which is the node which transmits the data packet.

The module to determine a specific set Lᵢ of cooperating nodes of a designated intermediate node, within the set Bᵢ of possible cooperating nodes comprises a sub module to obtain, within the mentioned set of possible cooperating nodes, the subset of nodes that are found within the coverage range from the previous node A_{¡-1} to the designated intermediate node Aᵢ of the forwarding path when said previous node of the designated intermediate node has transmitted the data packet; and a sub module to select, between the mentioned subset of nodes, the set Lᵢ of cooperating nodes of the designated intermediate node. It is important to note that in the present preferred embodiment, the determination of the set of cooperating nodes is created for a corresponding designated intermediate node for said data packet and when the mentioned designated intermediate node is unable of forwarding.

According to a preferred embodiment of the invention, the module for determining, among the set of possible cooperating nodes Bᵢ, the group Lᵢ of cooperator nodes of an designated intermediate node Aᵢ comprises a submodule for obtaining, from said set of possible cooperating nodes, a subset of nodes which are within coverage range of the previous node of the designated intermediate node of the forwarding path, when this previous node has transmitted the data packet; a submodule for obtaining, from this subset of nodes, a second subset of nodes, in a way that the next node to the designated intermediate node of the forwarding path is within the coverage range of this second subset of nodes; and a submodule for selecting, among this second subset of nodes, the group of cooperating nodes of the designated intermediate node. In the same way, the determination of the group Lᵢ of cooperating nodes is performed for the corresponding intermediate designated node, for the given data packet, and when this designated intermediate node is unable to forward.

The condition in which the subsequent node to the designated intermediate node of the forwarding path is found within the range of the mentioned second subset of nodes, in some cases, may be equivalent to the condition that the second subset of nodes are found within the range of the subsequent node to the designated intermediate node, as long as the channels of communication are bidirectional.

Also, the module to determine the set Bᵢ of cooperating nodes of a designated intermediate node Aᵢ may also be embodied in a computer program or as a module of a more general computer program that executes in a designated intermediate node, in this way being, the designated intermediate node itself who determines the set of possible cooperating nodes.

Be the means of embodiment as it may, the module to determine the subset Lᵢ of cooperating nodes of a designated intermediate node Aᵢ may also be embodied as a computer program or as a module of a more general computer program that executes in the cooperating nodes Lᵢ, in this way being, the set of cooperating nodes Lᵢ who determines whether it must or not cooperate for a given data packet.

Consequentially, a designated intermediate node Aᵢ can comprise a plurality of computer programs or of modules of a more general computer program, from those most important modules for receiving data packets from the previous node A_{¡-1} of the designated intermediate node within the forwarding path or in general a node belonging to a cloud whose master node is Aᵢ₋₁, to the designated intermediate node of the forwarding path ; the module to detect its inability to forward data packets; the module to communicate the mentioned inability of the previous node of the data packet forwarding path; the module to obtain its set of possible cooperating nodes; the module to determine its specific set of cooperating nodes, for a received data packet; a module to transmit the data packet to the subsequent node the forwarding path; a module to distribute to its set of possible cooperating nodes, the necessary forwarding information; the module to detect the incorrect functioning of a cooperating node; and a module to adequately manage the forwarding table.

Regarding this last module, every node of the network should comprise a forwarding table in which information, referencing the address of the destination node D and the address of the subsequent node that should transmit the data packet for towards the indicated destination node D, is stored. Therefore, the table should comprise, for each destination node, to which network node the data packet must be transmitted. In the same forwarding table there can be information referring to different routes present in the network, which show the ones that the node should intervene. Since the set of possible cooperating nodes of a designated intermediate node can vary during each predetermined time interval, it is necessary that the mentioned designated intermediate node maintains an actualized current forwarding table of the set of possible cooperating nodes, where it should transmit the forwarding information, every so often, for example, after determining the set of possible cooperating nodes. There also exists protocols in which is not necessary to be continually transmitting forwarding information, since the mentioned information already is known by the interested nodes.

On the other hand, the set Bᵢ of possible cooperating nodes can comprise, apart from the already described, a module for receiving a data packet from the previous node of the corresponding designated intermediate node; a module for detecting the inability of the designated intermediate node; a module for communicating the inability of the designated intermediate node; a module for transmitting the data packets to the subsequent node of the designated intermediate node in case that an inability of said node is detected; a module for detecting the incorrect functioning of a cooperating node; and a module for adequately managing the forwarding table.

The set of possible cooperating nodes also comprises a module for processing the received data packet, in a way that, when received, a node from the set of possible cooperating nodes can determine if it should take part or not in the forwarding of the packet, based on the address of the received data packet, and in case it should take part, using the address of the destination node D found in the data packet, can determine the address of the node that it should transmit the data packets, that is to say, the address of the subsequent node to the designated intermediate node.

Thus, in Fig.2, a SRSP (Single Relay Single Path) scheme is shown in which, after the route determination protocol determines a route (S, A₁, A₂, D) between the source node S and the destination node D, every hop is performed by a single node, either by the first designated intermediate node A₁ for the first hop, which transmits the data packet to (i) A₂, the subsequent node to the designated intermediate node within the forwarding path, or to (ii) the cloud B₂ of possible cooperating nodes of the mentioned subsequent node; or by the subset L₂ of cooperating nodes of the second designated intermediate node A₂, for the second hop , which transmits the data packet to the subsequent node D, which is the destination node.

Normally, the node that transmits the packet is the corresponding designated intermediate node, although sometimes, as was previously described, the method according to the invention should take part in order to determine the set of cooperating nodes in order to realize the forwarding of the data packet and avoid transmission problems between the nodes of the established route. This determination of the set of cooperating nodes can be performed by the designated intermediate node itself and/or its set of possible cooperating nodes; never via the previous node. In case that the set of cooperating nodes comprises more than one node, since it can only one can transmit a data packet, a criterion can be established describing which of the nodes of the set of cooperating nodes can forward the data packet. This way, the designated intermediate node can pre-establish an order, assigning to each node of the set of nodes a level of priority of actualization. So, in accordance with the scheme similar to SRSP, the address of the transmission present in the data packet references a node and not a set of nodes.

In Fig.3 an addressing scheme of the type MRSP (Multiple Relay Single Path) is showing, in which after a route has been determined (S, A1, A2, D) between the source node S and the destination node D, various nodes exists for forwarding the data packet or part of the packet to the next designated intermediate node and/or its associated set of cooperating nodes. The transmissions from this plurality of nodes should be performed orthogonally (for example, during different moments, in different frequencies, etc.), that is, both the designated intermediate node and its associated set of cooperating nodes act as forwarders, using orthogonal channels. Similar as in the previous scheme, the method according to the invention is still necessary in order to determine the nodes that should forward the data packet, in case that the designated intermediate node is not capable to do it. Summarizing, for this type of forwarding scheme, the address of transmission corresponds to the set of nodes which transmit the data packet.

Regarding the address of the reception, the use of an adequate addressing scheme is needed. One possible addressing scheme comprises an indicator which informs the set of possible cooperating nodes Bᵢ of a designated intermediate node Aᵢ, that they need to take part of the forwarding of the data packet in the case of inability of the designated intermediate node to do so. Thus, the mentioned scheme allows not only referencing the designated intermediate nodes, but also its set of possible cooperating nodes. The addressing scheme of the invention is the following:
Addressing the designated intermediate node Aᵢ:<@Aᵢ,0> Cloud address: <@Aᵢ,1,n>
where @Aᵢ is a string of bits, which may or may not comprise forwarding information and which only identifies the wireless interface of the designated intermediate node Aᵢ, "0" and "1" are bits used to differentiate between the cloud and node addresses, while n is the cloud sequence number, used for detecting conditions of incorrect behavior of the cooperating nodes due to the fact that they lose contact with the cloud to which they belong. Said addresses, like previously defined, can be used in the wireless network as the address of the node of source S, for the address of the destination node D, for the address of transmission, and/or for the address of transmission, within the control header of a data packet. The addresses of a set of cooperating nodes are related in similar way with the addresses multicast of various addressing schemes of layers 2 or 3. The addresses of IEEE 802.2 multicast or IP multicast are examples of this. In both cases, there have been no simple methods defined for allowing a multicast address to be assigned to each address unicast.

It is important to highlight that when a previous node to a designated intermediate node transmits a data packet, said transmission is performed at the same time in the designated intermediate node and in its set of possible cooperating nodes in such a way that, if the designated intermediate node is not able to forward the data packet, it is not necessary for the previous node to repeat the transmission of the data packet since the set of cooperating nodes, which is now responsible of forwarding the data packet, already has received and processed it starting with the first and only transmission. This way, in case that the designated intermediate node can forward the data packet, the set of possible cooperating nodes only receive and process the packet (and then discard it), and, meanwhile, if the designated intermediate node cannot forward the packet, the subset of cooperating nodes, determined from within the set of possible cooperating nodes, receives, processes, and transmits it to the subsequent node to the designated intermediate node. When the previous node determines that neither the designated intermediate node, nor its cooperators correctly received the data packet, it can hence retransmit or start a process to obtain a new route, like what would happen in a non-cooperative network.

In another embodiment it is necessary that the previous node of the designated intermediate node uses the enhanced addressing scheme described above, so that the set of possible cooperating nodes know that it should take part of the forwarding of the data packet, in case that the designated intermediate node is unable to do so. This way, the node which transmits the data packet should comprise, in the control part of the data packet, and more precisely, in the address of reception, the indicator (<@Aᵢ,1,n>) which informs the set of possible cooperating nodes of the designated intermediate node of the data packet, that it should cooperate in the forwarding of the data packet if necessary.

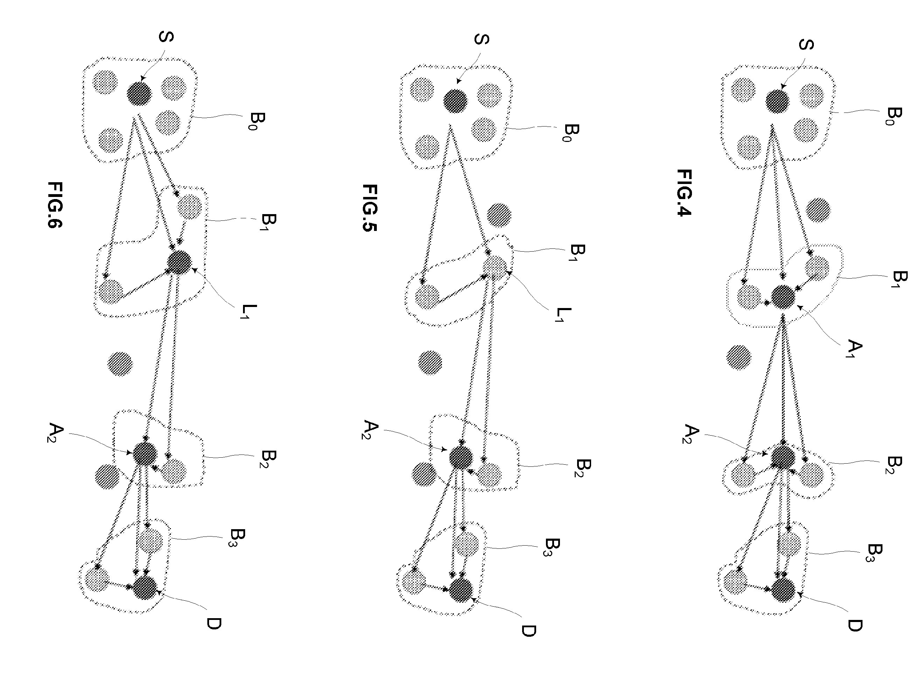

Starting with the method described above and with the help of figures 4, 5 and 6, the continuation of the forwarding of data packets method in a wireless network will be described according to the invention.

As shown in Fig.4, the protocol for determining the route determines the designated intermediate nodes A₁, A₂, among all the nodes within the network, for forwarding the data packet from the source node S to the destination node D, establishing for itself the route (S, A₁, A₂, D) for the data packet. Once the route is established, each one of the designated intermediate nodes A₁, A₂ determines their set of possible cooperating nodes, starting with the nodes of the network which are within their coverage range and that fulfill the ideal conditions for acting as a cooperator of the corresponding designated intermediate node, performing the mentioned action every certain periods of time. Also, during every certain period of time, each designated intermediate node of the forwarding path sends to its set of possible cooperating nodes the necessary information of the forwarding, starting with the one which updates the forwarding table of the set of possible cooperating nodes. In the present embodiment, a forwarding scheme similar to SRSP is used.

In a determined instant of time, the source node S, which is the one who generates the data packet, transmits to the set of possible cooperating nodes B₁ of the first designated intermediate node A₁ and to the first designated intermediate node itself as well, using the enhanced addressing scheme described above, that is, it establishes an receiving address as <@ A₁,1,n>, in such a way that the set of possible cooperating nodes, when processing the data packet received, knows that it should cooperate in the forwarding of the data packet in case that the first designated intermediate node is unable to do so. In case of Fig.4, the first designated intermediate node A₁ is able to forward the data packet, thus the set B₁ of possible cooperating nodes only receives and processes the packet. Said set of possible cooperating nodes knows that the designated intermediate node is able to forward the data packet because it receives the confirmation of reception sent by the first designated intermediate node A₁ to the node of source S. It is important to remember that the set of possible cooperating nodes of a designated intermediate node are found within the coverage range of the mentioned designated intermediate node (it is one of the established conditions so that a node can belong to the set of possible cooperating nodes).

The figures also show the possibility that the cooperating nodes help the designated intermediate nodes in the correction of possible errors in the received packet, by sending them information about the received packet.

Since the first designated intermediate node A₁ can forward the data packet (it has received the packet without errors), it processes the packet and determines, by means of the control header of the data packet, more precisely the address of destination node D, and from its forwarding table (via the address of the destination node, the forwarding table allows determining the address of the node subsequent in the route), the node that the data packet should be transmitted to so that the mentioned data packet gets to the destination node D, that is to say, the second designated intermediate node A₂. Thus, the first designated intermediate node A₁ transmits the data packets to the second designated intermediate node A₂ and to its set B₂ of possible cooperating nodes.

Since the second designated intermediate node A₂ is able to forward the data packet, everything described for the first transmission of the data packet (the one that references the first designated intermediate node), is suitable to this second transmission (the one that refers to the second designated intermediate node).

This way, the second designated intermediate node in the route transmits the data packet to the destination node D, achieving the objective of forwarding the data packet from the source node S to the destination node D.

It is important to remember that the method of the invention comprises a module (or computer program) which determines if a node of a set of possible cooperating nodes is malfunctioning, provoking its elimination from said set of possible cooperating nodes.

Fig.5 shows a network different from that of Fig.4. In said Fig.5, beginning with the same starting route configuration as Fig.4, that is, it has determined a route (S, A₁, A₂, D) of the data packet, etc., the node or source S transmits the data packet using the enhanced addressing scheme. Therefore, the data packet, in its control header, and more precisely, in the reception address, comprises the address <@ A₁,1,n>, which indicates to the set B₁ of possible cooperating nodes of the first designated intermediate node that it should cooperate in the forwarding of the data packet in case that the first designated intermediate node A₁ is not able to forward the data packet. As seen in Fig. 5, the first designated intermediate node is not able to forward the data packet, either because the node has moved and gone outside of suitable coverage range, or because it has disappeared, for example, due to a disconnection from an electric power shortage, or because the radiofrequency channel conditions have significantly worsened. In any case, its set B₁ of possible cooperating nodes will not receive the confirmation of reception of the data packet by the first designated intermediate node that should have been sent to the source node S. Therefore, the set B₁ of possible cooperating nodes of the first designated intermediate node A₁ knows that it should take part of the forwarding of the data packet. To do so, the first designated intermediate node and/or its set of possible cooperating nodes must determine a subset L₁ of cooperating nodes for the first designated intermediate node so that they will have to forward the data packet from the previous node (the source node S) to the subsequent node (the second designated intermediate node) in the forwarding path. The determination of the subset L₁ of cooperating nodes only has a local impact, and is transparent for the rest of the nodes which forward the data packet. For example, if the first designated intermediate node A₁ is found to be unable to forward the data packet during a large period of time, the source node S continues to send data packets with the address of reception <@Aᵢ,1,n>, that are received by the subset L₁ of cooperating nodes of the first designated intermediate node A₁.

The determination of the subset L₁ of cooperating nodes may be performed in different ways. Firstly, said subset L₁ of cooperating nodes of the first planed intermediate node A₁ can be formed by all the nodes of the set B₁ of possible cooperating nodes which also are within the coverage range of the previous node in the route, that is, within the coverage range of the node of source S. This option is a bit risky because it cannot be known that the set of cooperating nodes are within the range of the subsequent node in the route, that is, the second designated intermediate node A₂, or similarly, that the second designated intermediate node A₂ is within the coverage range of the subset L₁ of cooperating nodes of the first designated intermediate node A₁. Therefore, the possibility exists that the set of cooperating nodes of the first designated intermediate node cannot communicate with the subsequent node (the second designated intermediate node) and thus, the communication between the nodes in the network will be broken, as is the case in a non-cooperative network. On the other hand, this option allows the source node to receive the confirmation of reception of the data packet faster, which is adequate for already known protocols.

Alternatively, the subset L1 of cooperators of the first designated intermediate node A₁, can be formed by the nodes within the coverage range of the node of source S and at the same time within the coverage range of the subsequent node in the route, that is, the second designated intermediate node A₂, or conversely, that the second designated intermediate node A₂ is within the coverage range of the subset L₁ of cooperating nodes of the first designated intermediate node A₁. This option assures that the selected node for forwarding the data packet is able to do it.

In case that the set of cooperating nodes comprises more than one node, the corresponding designated intermediate node pre-establishes a criteria of cooperation that is like the designation of the task of intervening to the nodes that belong to the set of cooperating nodes. This way, in case the first option to determine the set of cooperating nodes occurs, the node who forwards the data packet at first, sends the confirmation of reception of the data packet to the previous node in the route, since it is within its coverage range, but it is possible that it cannot transmit the data packet to the subsequent node because it is not within its coverage range. In this case, the second node forwarding the data packet should do it. By all of the described above it is understood that the previous node does not take part in the selection of the node which must forward ahead the data packet; this is performed by the corresponding designated intermediate node and/or its set of possible cooperating nodes. This previous node is aware that the packet has been received by a node belonging to the next cloud, since it receives the confirmation of reception from either the corresponding designated intermediate node or one of the cooperating nodes of said corresponding designated intermediate node. However, in case that the acknowledgements are received from cooperating nodes, it can start a process to find an alternative forwarding path. While this forwarding path has not been established, the packets can follow the current forwarding path.

Looking back at Fig.5, once the select set of cooperating nodes of the first designated intermediate node A₁ has been determined, the node, from this set of corresponding nodes, responsible of forwarding the data packet, sends the confirmation of reception of the data packet to the node of source S and transmits the data packet to the subsequent node in the route, that is, to the second designated intermediate node A₂ and its set B₂ of possible cooperating nodes, after processing the data packet and obtaining the address of the subsequent node of the route (the second designated intermediate node) using the address of the destination node D found in the control header of the data packet and the forwarding table of the mentioned node, from the set of cooperating nodes, in charge of forwarding the packet.

It is important to note that the source node S should not retransmit the data packet in case that the first designated intermediate node is unable to forward this data packet, since the set of cooperating nodes in charge of forwarding the data packet has already received, processed and saved it for a future forwarding in case that they detect the inability of the first designated intermediate node to do so.

Alternatively, if there are no available cooperating nodes of the first designated intermediate node for the received packet, the performance of the network is the same as a non-cooperative network, and not worse.

Following with Fig.5, once the second designated intermediate node A₂ has received the data packet, it sends the confirmation of reception to the previous node in the route (the node of the subset L₁ of cooperating nodes of the first designated intermediate node A₁), processes it and determines the address of the subsequent node in the route, that is, the address of the destination node D. This destination node D confirms the reception of the data packet to the second designated intermediate node, completing the forwarding of the data packet.

In Fig.6, the subset L₁ of cooperating nodes of the first designated intermediate node A₁ requests a change for being the new first designated intermediate node in such a way that the new forwarding path is defined as (S, L₁, A₂, D). This change in the forwarding path can be either decide by the node S, when it received acknowledgments from cooperating nodes of the node A₁, instead of receiving acknowledgements from the node A₁ itself. In order to perform this change, the method activates a process to establish a new route, utilizing, for example, the subset L₁ of cooperating nodes of the first designated intermediate node A₁ as the new first designated intermediate node. Once the forwarding table of the node of source S (and its set of possible cooperating nodes if required) has been updated in a way that no loops within the route from source to destination are formed, the packets are transmitted with a new address of reception, for instance <@L₁,1,n>.

In a more general sense, when a designated intermediate node Aᵢ is found to be unable of forwarding data packets after a large period of time, there exists the possibility that its set Lᵢ of cooperating nodes, or its set Bᵢ of possible cooperating nodes, request the establishment of a new route, utilizing, for example, this set of cooperating nodes as the new designated intermediate node, the new route being (S, A₁, ..., Aᵢ₋₁, Lᵢ, Aᵢ₊₁, ...D). Once the forwarding table of the node Aᵢ₋₁ has been updated, the packets are transmitted with a new address of reception <@Lᵢ,1,n>.

In the following, a description of an embodiment of the invention will be explained. More precisely, a possible embodiment of a cooperative method for forwarding for a wireless ad-hoc network will be described.

For describing this embodiment the following assumption will be used:
- A layer 2 technology will be used, deriving this layering terminology of the ISO "Open System Interconnection Reference Model". Thus, "layer 2" refers to the data link layer, including the Medium Control Access (MAC) functions. As a main example, the protocol described by the IEEE 802.11 standard is used. This layer 2 technology allows the communication among nodes in an ad-hoc way. The frames do not need to comprise the addressing scheme described below (i.e. addressing a possible set of cooperating nodes or a cooperating cloud), although a layer 2 protocol which comprises this natively would be without any doubt more efficient. It is assumed that the layer 2 frames addressed to a single node receive some type of acknowledgement (ACK frame). As a reference, the description of the embodiment uses the nomenclature and standard methods of the IEEE 802.11 standard for the layer 2 technology, although its application scope is much more general.
- It is assumed that the routing through nodes, i.e. the forwarding path selection which is reflected in the forwarding tables of the nodes, is done at layer 3, although this is not strictly necessary, understanding as "layer 3" the network layer. As an example, the IP protocol defined by the IETF for layer 3 is used. Moreover, the L3 routing protocol is performed with AODV with Local repair capacity (at least for preventive Local Repair). The methods, however, are general and could be adapted to other routing protocols of L3 with capacity of dynamical repair of routes (for instance, AODV without Local repair, OLSR, etc).
- The Forwarding table in this embodiment will be referred to as "L2/L3 table", as it is assumed that the destination/origin addresses are IP addresses (i.e. belonging to layer 3), while the transmission/reception addresses are from the MAC layer (i.e. 48 bit addresses of the same type as the ones used in the IEEE 802.11 standard), to which some new information fields have been added to indicate whether the address is a cloud or a node address and to indicate the cloud sequence number.

A distinction is made between two types of Local repair (LR):
- *Normal Local Repair:* while the Local Repair is being performed, packets placed in the nodes affected by the change of route are not transmitted and they are kept stored in a buffer, waiting for the route to reestablish.
- *Preventive Local Repair*: While the *Local Repair* is being performed, the affected nodes maintain the packet transmission. It is assumed that the link towards the destination is not broken thanks to the operation of the cooperating nodes of the next-hop node. It is possible that during the preventive LR process a normal LR occurs.
   In this case the LR process continues (no new RREQ messages are generated in the AODV case), although packets placed in the affected nodes are buffered.
- In the method description, global cooperators are assumed, i.e. the possibility that a node has different cooperators per path is not considered, although this is not a key issue when describing the method.
- It is assumed that nodes have a single interface for radio transmission, although again this point is not strictly set for the protocol operation.
The set of possible cooperating nodes is determined from the exchange of C-HELLO messages. The C-HELLO messages must be transmitted in broadcast L2 frames at least every TC-HELLO seconds. The format of these packets is defined below. It is possible to send these C-HELLO messages with a transmission power lower than the transmission power of the other packets (the goal is to determine cooperating nodes, not neighbours), and this way to have a lower traffic load in the transmission medium.

The C-HELLO messages have several functions:
- They allow the neighboring nodes to node N which transmits the message to determine the intensity level of the signals of the transmissions of N. The cooperating nodes typically must have a very good reception level of the messages sent by its intermediate node, in such a way that not all the neighboring nodes are possible cooperators.
- They comprise a list of the nodes that the node N, which transmits the message, considers as their cooperators. In this list, information about priority or timing in the cooperators operation can be comprised. If a node does not have any cooperators, an empty list is sent.
- It can comprise a list of the intermediate nodes (masters) of the node. This way, the intermediate node can know that a cooperator no longer considers it as a cooperating node, which is an indication that the cooperator does not have a good transmission with the designated intermediate node's neighbors.
- When the node is an intermediate node and it does have cooperators, routing information is also comprised to its cooperators.
- They allow the intermediate node to be able to communicate changes in the cloud identifier (i.e. the set of possible cooperating nodes) to its cooperators.
- Potentially, they could incorporate information related to power saving policies. When a modification in the set of possible cooperating nodes, in their priority, or in the L3/2 table with own context occurs, a C-HELLO message is also immediately transmitted, including the corresponding changes. Typically, this condition in the intermediate node also increases the cloud identifier.

It is possible to develop several algorithms to determine the order of time in the node's cooperators operation. The inputs to this algorithm could be: priorities assigned by the designated intermediate node, whether or not the next-hop is comprised in our forwarding table, link quality in the last times the node has transmitted to the next-hop, etc. Some of these are explained in more detail below.

It could also be considered that a C-HELLO was generated when the table of the designated intermediate node was changed.

A designated intermediate node selects cooperators and assigns priorities in function of: SNR received in C-HELLOs, number of time in which a node has voluntarily declared itself as a non-cooperator, etc.

A node N is considered cooperator of other node N' when it listens some C-HELLO message sent by N' in which it appears as comprised in the cooperator list.

The reasons for a node to no longer be a cooperator of another node are the following:
- It receives a C-HELLO and sees that it has been erased of the CL of the intermediate node;
- The timeout is triggered (as it does not receive C-HELLOS);
- When acting as a cooperator, the transmission of N_MAX_RETRY_COOP packets fails MAX_RETRY_COOP times;
- It does not find the path in its table with context of the designated intermediate node;
- A possible reason could be the case in which the C-HELLOs received by a designated intermediate node have a bad SNR, which will produce as a consequence that they cease to consider themselves as cooperators;
- If a packet with a cloud sequence number larger than the one assigned is received, it does not cooperate for this packet, although it does not erase itself as a cooperator.

It is important that the number of non-received C-HELLO for considering itself a non-cooperating node is large enough as to allow the operation of the path change method (preventive Local Repair) in case the designated intermediate node disappears.

On the other hand, if N is a designated intermediate node and modifications in the L3/2 table occur but without affecting the context N (as, for instance, they only affect the context N', N' being a node which is an intermediate node of N), N does not need to notify these changes to its neighboring nodes. Moreover, the number of C-HELLO per second should be bounded.

When a node detects the duplicate C-ACK reception for the same packet with cloud sequence number of n, it must increase the sequence number of the packets to n+1. If these packets arrive to the designated intermediate node, it must increase the cloud sequence number to n+1, sending a C-HELLO, in order to produce that from this moment on only the cooperators which have connectivity with the designated intermediate node will cooperate.

The following is a description of the transmission of the packets in which a cooperation flag is activated in the cooperative header. It is important to highlight that not all packets will have this flag activated (for instance, signalling messages).

The node N determines first whether it must discard or not the packet, using the reception L2 address. If this address corresponds to:
- the node itself (node unicast address or broadcast address, that is, to a reception address with format <@N,0>, where @ corresponds to the node address);
- to any of the clouds to which it belongs as cooperator, it is to say, with an reception address of the type <@N',1,n>, wherever the sequence cloud number which appears in the packet address is lower or equal to the cloud number;
- to the cloud of which it is master, it is to say, with a reception address with format <@N,1,n>, where @N corresponds to the node address; it proceeds to processing the packet. Otherwise, it is discarded.

If the layer L2 reception address corresponds to the one of the node itself, or it is a broadcast address, the node N must examine the destination address, checking whether @₃Dest = @₃N. If @₃Dest ≠@₃N the *forwarding* of the packet will be performed (In the IP packet case, for instance, this implies decreasing the TTL field, re-compute the IP header checksum, etc). This will be also be done in the case the address is the cloud address of the cloud of which the node is master, independently of the cloud number.

If a cooperating node of a specific cloud has the number m as cloud sequence number and it receives a packet addressed to this cloud with a sequence number of n, with n lower of equal to m, the packet is stored in a buffer, waiting to be either discarded or retransmitted. In the case the packet must be retransmitted, during the L2/L3 table look-up, the context of the corresponding designated intermediate node is used.

If a node N must forward a packet, it looks-up the L3/2 table, using the adequate context, searching the next-hop to forward the packet. One must distinguish among the cases in which the node N is a designated intermediate node of the path followed by the packet or in which the node acts as a cooperator.

Every node keeps a sequence number *CloudSN* which will indicate the cloud in which it will be a designated intermediate node.

It is assumed that the layer L2 protocol sends acknowledgments (ACK) for the frames comprising destination unicast address (i.e. addressed to a single node) and correctly received.

When the designated intermediate node does not send the corresponding ACK, one among the cooperating nodes which have correctly received the frame sends an ACK that will be called C-ACK. This way, the node which has transmitted the data frame knows that it has been correctly received, by the designated intermediate node or by at least one of its cooperators. Although the ideal situation would be the possibility that the sending of C-ACK would be completed by the layer L2 protocol itself, this is not necessarily like this. For instance, the IEEE 802.11 does not consider this possibility. Then, it is considered the possibility that the 802.11 frames whose content corresponds to the C-ACK packets are generated either by the designated intermediate node itself or by the cooperators.

The node operation is specified in the following algorithm.

N.CloudSN[M] refers to the value of the cloud sequence number of the cloud whose master is node M, stored in node N. As a simplification, instead of N.CloudSN[N], N.CloudSN is used.

It is assumed that a node N sends a packet P with cooperation, with reception address <@₂M,1,n>

For detecting the broken cloud condition, the action of the node N which is sending the packets to the cloud is needed: When node N receives a C-ACK with a sequence number, it updates the sequence number associated to the cloud, in case that the one it knows is lower. In the normal operation of the algorithm, it should not be the case that the node which receives a C-ACK having an associated cloud number higher than the one that is in the C-ACK.

If the node N receives more than a C-ACK associated to a packet, it increases the sequence number associated to the transmission of this packet, in such a way that the next packet which transmits will have an increased sequence number. It is important to highlight that this will cause that, if one of the nodes which sends the C-ACK is the master, this master node uses the increased sequence number, and that it communicates the change to its cooperators by means of the transmission of a C-ACK, whereas the node that has retransmitted the packet erroneously (probably because it is not within coverage range of the master node) will not retransmit this packet with the increased sequence number. Unless it (i.e. the cooperating node) is able to listen to the C-ACKs in which the cloud sequence number is updated, this cooperating node will be outside the cloud. This way it is possible to detect and correct situations in which a cooperating node keeps erroneously cooperating when the master has a correct performance but it has been moved outside the coverage range of the cloud.

The context is a node identifier which is used as a key to manage a L3/2 table (for instance, when performing a look-up). It indicates that the node which appears in <@₂Context> is considered a designated intermediate node for a forwarding path with destination <@₃Dest>. If the L3/2 table of a node N has an entry with context N, it is said that this entry is in its "own context". This entry will be generated as consequence of L3 routing decisions in the node N itself. If an entry has a context N', N' must belong to Master(N) and the entry will be generated as a consequence of the reception of a C-HELLO message.

When a node consults its L2/3 table (e.g. when performing a look-up) it does so under a specific context. For instance, if the node is forwarding a packet without cooperating with other node, the context will be its own context. On the other hand, if the node is forwarding the packet as a consequence of its cooperation with another node, it will do so with the context associated to the other node. In other words, the context allows that the same node has different views of the packet forwarding: the corresponding to the node itself and the corresponding to each of its designated intermediate nodes (or masters).

Although the present invention has been described in detail for purpose of illustration, it is understood that such detail is solely for that purpose, and variations can be made therein by those skilled in the art without departing from the scope of the invention.

Thus, while the preferred embodiments of the methods and of the systems have been described in reference to the environment in which they were developed, they are merely illustrative of the principles of the invention. Other embodiments and configurations may be devised without departing from the scope of the appended claims.

Furthermore, although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source code, object code, a code intermediate source and object code such as in partially compiled form, or in any other form suitable for use in the implementation of the mehods according to the invention. The carrier may be any entity or device capable of carrying the program.

For example, the carrier may comprise a storage medium, such as a ROM, for example a CD ROM or a semiconductor ROM, or a magnetic recording medium, for example a floppy disc or hard disk. Furthermore, the carrier may be a transmissible carrier such as an electrical or optical signal, which may be conveyed via electrical or optical cable or by radio or other means.

When the program is embodied in a signal that may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant methods.

## Claims

1. A system for forwarding at least one data packet in a wireless communication network, from an origin node (S) to a destination node (D), through at least one node (A1,A2) of the network which acts as a designated intermediate node, generating a data packet forwarding path (S,A1,A2,D), **characterized in that** it comprises means for detecting the incapacity of the designated intermediate node (A1;A2) to forward through itself the data packet from the previous node to the next node, as established by the data packet forwarding path; and means for determining, among a set of nodes (N0,...,N15), a group of cooperating nodes (L1,L2) of the designated intermediate node, for forwarding, through itself, the data packet from the previous node to the next node as established in the data packet forwarding path, in case that the incapacity of the designated intermediate node is detected.

2. A system according to claim 1, **characterized in that** it further comprises means for obtaining a plurality of nodes (B1;B2) of potential cooperating nodes for the designated intermediate node.

3. A system according to claim 2, **characterized in that** the means for obtaining the plurality (B1;B2) of potential cooperating nodes of the designated intermediate node (A1;A2), comprise means for obtaining the plurality of nodes which are within coverage range of the designated intermediate node, and means for selecting, among this plurality of nodes, the plurality of potential cooperating nodes of the designated intermediate node, in such a way that this plurality of potential cooperating nodes have optimal conditions for acting as cooperating nodes of the designated intermediate node.

4. A system according to any of claims 2 or 3, **characterized in that** the means for determining the group (L₁;L₂) of cooperating nodes of the designated intermediate node (A1;A2), comprise means for obtaining, from the plurality (B₁;B₂) of potential cooperating nodes, the subset of nodes which are within coverage range of the previous node of the designated intermediate node as established by the data packet forwarding path, when said node previous to the designated intermediate node has transmitted the data packet; and means for selecting, among this set of nodes, the group of cooperator nodes of the designated intermediate node.

5. A system according to any of claims 2 or 3, **characterized in that** the means for determining the group (L₁;L₂) of cooperating nodes of the designated intermediate node (A1;A2), comprise means for obtaining, from the plurality (B₁;B₂) of potential cooperating nodes, the subset of nodes which are within coverage range of the previous node to the designated intermediate node as established by the data packet forwarding path, when the previous node to the designated intermediate node has sent the data packet, means for obtaining, from said subset of nodes, a second subset of nodes, in such a way that the node after the designated intermediate node, as established by the data packet forwarding path, is within coverage of said second subset of nodes, and means for selecting, among this second subset of nodes, the group of cooperating nodes of the designated intermediate node.

6. A system according to any of claims 2 to 5, **characterized in that** the transmission of the data packet made by the previous node to the designated intermediate node is performed, at the same time, to both the designated intermediate node (A1;A2) and to the set (B1;B2) of potential cooperating nodes of the designated intermediate node.

7. A system according to any of claims 2 to 6, **characterized in that** the means for obtaining the set (B1;B2) of potential cooperating nodes of the designated intermediate nodes (A1;A2), operate at predetermined time periods.

8. System according to any of claims 2 to 7, **characterized in that** the means for obtaining the set (B1;B2) of potential cooperating nodes of the designated intermediate nodes (A1;A2), comprise means for detecting the inability of the designated intermediate node.

9. System according to any of claims 2 to 8, **characterized in that** at least one of the nodes of the set (B1;B2) of potential cooperating nodes of the designated intermediate node (A1;A2) comprises means for communicating the incapacity of the designated intermediate node to the previous node of the designated intermediate node, as established in the forwarding path of the data packet.

10. System according to any of the previous claims, **characterized in that** at least one of the nodes in the routing path (S,A1;A2,D) comprises routing information.

11. A system according any of claims 2 to 10, **characterized in that** the data packet transmitted to the designated intermediate node (A1;A2) and to its set (B1;B2) of potential cooperating nodes, comprises a flag or indicator which informs the nodes of the set of potential cooperating nodes that they must cooperate in the forwarding of said data packet.

12. A system according to any of claims 2 to 11, **characterized in that** the designated intermediate node (A1;A2) comprises means for distributing to its set of potential cooperating nodes (B1;B2), the required routing information.

13. A system according to any of claims 2 to 12, **characterized in that** further comprises means for detecting the incorrect operation of a node of the set (B1;B2) of potential cooperating nodes.

14. A system according to any of claims 2 to 13, **characterized in that** the set (B1;B2) of potential cooperating nodes comprises an identifier of the set (B1;B2).

15. A system according to claim 14, **characterized in that** the routing information of at least one of the nodes of the data packet path (S,A1;A2,D), comprises the identifier of its set (B1;B2) of potential cooperating nodes.

16. A system according to any of claims 2 to 15, further comprising a mechanism which allows a cooperating node belonging to the set (B1;B2) of potential cooperating nodes, to know that it does not receive correctly anymore the messages of the designated intermediate node of this set (B1;B2) of potential cooperating nodes.

17. A method for forwarding at least one data packet in a wireless network, from an origin node (S) to a destination node (D), through at least one network node (A1;A2) which acts as a designated intermediate node, building a data packet forwarding path (S,B1;B2,D), **characterized in that** it comprises the steps of:
A) Detecting the incapacity of the designated intermediate node to forward through itself the data packet from the previous node of the designated intermediate node to the next node of the designated intermediate node as established by the data packet forwarding path;
B) In case of a positive detection in step (A), determining a group (L1;L2) of cooperating nodes of the designated intermediate node, among a plurality of network nodes, to forward through it the data packet from the previous node of the designated intermediate node, to the next node, as established by the data packet forwarding path.

18. A method according to claim 17, **characterized in that** it comprises a step (C) of obtaining a set (B1,B2) of potential cooperating nodes of the designated intermediate node.

19. A method according to claim 18, **characterized in that** step (C) of obtaining a set (B1,B2) of potential cooperating nodes of the designated intermediate node, comprises the steps of:
C.1) Obtaining the set of nodes which are within coverage range of the designated intermediated node;
C.2) Selecting, among said set of nodes, the set (B1,B2) of potential cooperating nodes of the designated intermediate node, in such a way that this set of potential cooperating nodes fulfill optimal conditions for acting as cooperating nodes of the designated intermediate node.

20. A method according to any of claims 18 or 19, **characterized in that** step (B) of determination of the group (L1;L2) of cooperating nodes of the designated intermediate node (A1;A2), comprises the steps of:
B.1) Obtaining, among the set (B1,B2) of potential cooperating nodes, the subset of nodes which are within coverage range with the previous node to the designated intermediate node as established by the data packet forwarding path, when the previous node of the designated intermediate node has transmitted the data packet;
B.2) Selecting, among this subset of nodes, the group of cooperating nodes of the designated intermediate node.

21. A method according to any of claims 18 or 19, **characterized in that** step (B) of determination of the group of cooperating nodes of the designated intermediate node (A1;A2) comprises the steps of:
B.3) Obtaining, from the set (B1,B2) of potential cooperating nodes, the subset of nodes which are within coverage range with the previous node to the designated intermediate node (A1;A2) as established by the data packet forwarding path, when the previous node of the designated intermediate node has transmitted the data packet;
B.4) Obtaining, from this subset of nodes, a second subset of nodes, in such a way that the next node to the designated intermediate node (A;A2) as established in the data packet routing path, is within coverage range of the nodes of the second subset of cooperating nodes of the designated intermediate node;
B.5) Selecting, among this second subset of nodes, the group of cooperating nodes of the designated intermediate node.

22. A computing system in a system according to any of claims 1 to 16, **characterized in that** it is adequate for operating as a cooperating node of the designated intermediate node (A1;A2), comprising means for detecting the incapacity of the designated intermediate node for forwarding through it the data packet from the previous node to this designated intermediate node to the next node, as established by the data packet forwarding path, and means for receiving the data packet from the previous node to the designated intermediate node and transmitting it to the next node, as established by the data packet forwarding path, in case that the incapacity of the designated intermediate node is detected.

23. A system according to claim 22, **characterized in that** the means for transmitting the data packet to the next node of the designated intermediate node, comprise means for introducing in the data packet an indicator which informs to the set (B1;B2) of potential cooperator nodes of the designated intermediate node (A1;A2) that must cooperate on the forwarding of the data packet).

24. A method for forwarding at least one data packet in a computing system according to any of claims 22 or 23, **characterized in that** comprises the steps of:
D) Receiving the data packet from the previous node of the designated intermediate node as established by the data packet forwarding path;
A) Detecting the incapacity of the designated intermediate node (A1;A2) to forward through itself the data packet from the previous node of the designated intermediate node to the next node of the designated intermediate node as established by the data packet forwarding path;
E) In case of a positive detection in step (A), transmitting the data packet to the next node of the designated intermediate node.

25. A computer program comprising instructions which are executed in computing system for performing the method according to claim 24.

26. A computer program according to claim 25 **characterized in that** it is stored in a storage media.

27. A computer program according to claim 25, **characterized in that** it is carried by a carrier wave.
